# EUROPÄISCHE PATENTSCHRIFT

(11) **EP 1 019 984 B1**
(45) Veröffentlichungstag und Bekanntmachung des Hinweises auf die Patenterteilung: **08.01.2003**
(21) Anmeldenummer: 98954360.8
(22) Anmeldetag: 06.10.1998
(51) Int. Cl.: H01R 12/08

(54) **ABZWEIGKOPPLER FÜR ELEKTRISCHE LEITUNGEN**
BRANCH-FEEDER FOR ELECTRIC LINES
COUPLEUR DE DERIVATION DESTINE A DES LIGNES ELECTRIQUES

(30) Priorität: 07.10.1997 DE 19744343
(43) Veröffentlichungstag der Anmeldung: 19.07.2000
(73) Patentinhaber: W.L. GORE & ASSOCIATES GmbH, 85636 Putzbrunn (DE)
(72) Erfinder: HARREISS, Jürgen, D-91710 Gunzenhausen (DE); SATZINGER, Gerhard, D-91735 Muhr (DE)
(74) Vertreter: Klunker . Schmitt-Nilson . Hirsch
(86) Internationale Anmeldenummer: EP9806359
(87) Internationale Veröffentlichungsnummer: WO99018632

(56) Entgegenhaltungen:
- EP-A1- 0 795 931
- WO-A1-97/15965
- DE-A1- 19 703 797
- DE-A1- 19 747 116
- DE-C1- 19 647 925
- US-A- 3 158 421
- US-A- 4 898 544

## Beschreibung

Die Erfindung betrifft einen Abzweigkoppler für elektrische Leitungen, bei denen es sich um Leistungs- und/oder Signalleitungen handeln kann. Derartige Abzweigkoppler können als elektrische Verteiler und/oder elektrische Verbinder dienen.

Solche Abzweigkoppler können bei allen elektrischen Systemen verwendet werden, wo eine oder mehrere eingehende Leitungen mit einer oder mehreren ausgehenden Leitungen gekoppelt werden sollen. Ein Einsatzgebiet ist die Luftfahrt, insbesondere im Zusammenhang mit Frachtladesystemen.

Bei letzterer Anwendung werden herkömmlicherweise keine Koppler oder Verteiler verwendet sondern lauter einzelne Verbindungskabel. Diese benötigen viel Platz, können sich verheddern und haben ein hohes Gesamtgewicht.

Zur Überwindung dieser Probleme wurde eine Verteilereinrichtung geschaffen, die aus einer Kunststoff- oder Holzplatte besteht, in die mehrere metallische Pfosten eingelassen sind, die eine mit Kreuzschlitz versehene Oberfläche aufweisen. Anstatt lauter einzelne Verbindungskabel zu den einzelnen Einsatzorten zu verlegen, werden eine Quelle und ein in der Nähe mindestens eines Einsatzortes befindlicher Verteiler mittels eines Sammelkabels, beispielsweise in Form einer Datenbusleitung, verbunden. Das Sammelkabel wird an der Stelle des Verteilers abgeschnitten, dessen einzelne Leiter werden an der Schnittstelle durch Abisolieren freigelegt und die freiliegenden Leiterenden werden auf die Kreuzschlitz-Oberfläche je eines Pfostens des Verteilers aufgelötet. Dabei werden die Leiter des Sammelkabels von einer bestimmten Richtung her an die Platte des Verteilers herangeführt. Abisolierte Leiterenden von von dem Verteiler weiterführenden Leitungen oder Kabeln werden in dem gewünschten Winkel zur Richtung des Sammelkabels, beispielsweise um 90° versetzt, an die Platte des Verteilers herangeführt und auf die entsprechenden Pfosten ebenfalls aufgelötet. Dadurch ist eine Weiterführung der abgehenden Leiter oder Kabel in der gewünschten Richtung möglich. Sobald alle Leitungen mit den Pfosten verlötet sind, werden die Platte und ihre Pfosten einschließlich der Lötstellen mit einem Kunststoff wasserdicht umspritzt oder umgossen.

Mit dieser Lösung wird zwar erreicht, daß nur ein oder wenige Sammelkabel von der Quelle bis zu dem jeweiligen Verteiler benötigt werden. Allerdings lassen sich bei dieser Art Verteiler nach dem Umspritzen oder Umgiessen mit Kunststoff keine Änderungen oder Reparaturen mehr vornehmen. Außerdem hat ein derartiger Verteiler ein relativ hohes Gewicht und Volumen und läßt sich nur mit hohem Aufwand konfektionieren.

Aus der DE-A-197 03 797 ist eine Anschlußeinrichtung für Flachbandkabel bekannt, die ein zweiteiliges Verbindergehäuse aufweist, zwischen denen das anzuschließende Flachbandkabel festgehalten wird. In diesem Verbindergehäuse sind Klemmschneid-Anschlußelemente angeordnet, die den einzelnen Leitern des Flachbandkabels gegenüberstehen, relativ zum Flachbandkabel bewegbar gehalten sind und mit einem elektrischen Verteilerelement elektrisch verbunden sind.

Durch Verschiebung ausgewählter Klemmschneid-Anschlußelemente können diese in elektrischen Klemm-Schneidkontakt mit zugehörigen Leitern des Flachbandkabels gebracht werden.

Ein aus der US-A-3 158 421 bekannter elektrischer Verbinder verbindet an einem Rand einer Leiterplatte befindliche Kontaktleiterbahnen mit Kabelleitern eines Bandkabels an einer Kabelstelle, die sich zwischen den Kabelenden befindet. Zu diesem Zweck wird das Bandkabel an dieser Kabelstelle schlaufenartig um den Leiterplattenrand herumgelegt und werden der Leiterplattenrand und der um den Leiterplattenrand herumgelegte Bereich des Bandkabels in einen mit Aufnahmekontakten versehenen Aufnahmeschlitz des Verbinders gesteckt.

Aus der WO-A-97/15965 ist eine Verbinderanordnung bekannt, bei welcher einerseits zwei Bandkabelenden mit je einem Verbinder verbunden sind und andererseits ein zwischen den Bandkabelenden befindlicher Bandkabelbereich mit einem dritten Verbinder verbunden ist. Im Bereich des dritten Verbinders ist das Bandkabel in eine Schlaufe gelegt, die in einer Aufnahmeöffnung des dritten Verbinders aufgenommen ist.

Der Erfindung liegt die Aufgabe zugrunde, einen zu geringem Gewicht rührenden und leicht konfektionierbaren Abzweigkoppler verfügbar zu machen, der einerseits eine spätere Änderung oder Reparatur, die beispielsweise durch eine defekte Leitung erforderlich wird, ermöglicht, und andererseits mit möglichst niedrigem Kostenaufwand herstellbar ist.

Zur Lösung dieser Aufgabe macht die Erfindung einen Abzweigkoppler der in Anspruch 1 angegebenen und gemäß den Ansprüchen 2 bis 10 weitergebildeten Abzweigkoppler verfügbar. Dieser kann als elektrischer Verteiler oder als elektrischer Verbinder dienen. Ein Verfahren zur Herstellung eines erfindungsgemäßen Abzweigkopplers gibt Anspruch 11 an und kann gemäß den Ansprüchen 12 bis 14 weitergebildet werden.

Einerseits schafft die Erfindung einen Abzweigkoppler für elektrische Leitungen, mit einem Bandkabelstück mit zwei Längsenden, wobei das Bandkabelstück mehrere nebeneinander angeordnete, sich in Kabellängsrichtung erstreckende Bandkabelleiter mit je einer oberen und einer unteren Leiterseite aufweist; die Bandkabelleiter in Isoliermaterial eingebettet sind; die Bandkabelleiter an den beiden Längsenden und in mindestens einem dazwischen befindlichen Fenster freiliegende Leiterbereiche aufweisen, in denen sie auf mindestens einer der beiden Leiterseiten frei von Isoliermaterial sind; und das Bandkabelstück durch mehrfaches Übereinanderfalten zu einem mindestens dreilagigen Bandkabelelement gefaltet ist, derart, daß die freiliegenden Leiterbereiche an drei verschiedenen Seiten des Bandkabelelementes liegen und Anschlüsse für die elektrischen Leitungen bilden.

Andererseits schafft die Erfindung ein Verfahren zur Herstellung eines Abzweigkoppler für elektrische Leitungen, bei welchem ein Bandkabelstück bereitgestellt wird, das eine vorbestimmte Kabellänge, mehrere nebeneinander angeordnete, sich in Kabellängsrichtung erstreckende Bandkabelleiter mit je einer oberen und einer unteren Leiterseite und die Bandkabelleiter einbettendes Isoliermaterial aufweist; bei welchem Bereiche der Bandkabelleiter an beiden Längsenden des Bandkabelstücks und mindestens in einem Fenster zwischen den beiden Längsenden auf mindestens einer der beiden Leiterseiten durch Abisolieren des Isoliermaterials freigelegt werden; und bei welchem das Bandkabelstück durch mehrfaches Übereinanderfalten zu einem mindestens dreilagigen Bandkabelelement gefaltet wird, derart, daß die freigelegten Bereiche der Bandkabelleiter an mindestens drei verschiedenen Seiten des Bandkabelelementes zu liegen kommen und Anschlüsse für die Leitungen bilden können.

Dabei kann das Übereinanderfalten eine Querumfaltung des Bandkabelstücks in einer quer zur Kabellängsrichtung verlaufenden Querfaltungslinie mindestens in dem Fenster und eine Schrägumfaltung des Bandkabelstücks in einer unter einem vorbestimmten Schrägwinkel gegenüber der Kabellängsrichtung verlaufenden Schrägfaltungslinie mindestens zwischen dem Fenster und einem der beiden Kabellängsenden umfassen.

Die Kernidee der Erfindung besteht darin, ein Bandkabelstück mit mehreren nebeneinander angeordneten, in Isoliermaterial eingebetteten Bandkabelleitern, die an beiden Bandkabellängsenden und mindestens in einem Fenster zwischen den beiden Bandkabellängsenden auf mindestens einer Breitseite des Bandkabels durch Abisolieren des Isoliermaterials freigelegt sind oder durch frei Lassen von Isolationsmaterial freiliegen, durch mehrfaches Übereinanderfalten zu einem mindestens dreilagigen Bandkabelelement zu falten, bei dem die freigelegten oder freiliegenden Bandkabelleiterbereiche an mindestens drei verschiedenen Seiten des Bandkabelelementes liegen und Anschlüsse für die Leitungen bilden.

Unter Breitseite ist vorliegend eine Hauptoberfläche des Bandkabelstücks zu verstehen, von welcher aus Isoliermaterial bis hinab zu den benachbarten Oberflächen der Bandkabelleiter abgetragen wird.

Das Übereinanderfalten kann ein Querumfalten des Bandkabelstücks wenigstens in dem mindestens einen Fenster und ein Schrägumfalten des Bandkabelstücks mindestens zwischen dem Fenster und einem der beiden Längsenden des Bandkabelstücks umfassen. Das Querumfalten geschieht entlang einer Querfaltlinie, die quer zur Kabellängsrichtung verläuft. Das Schrägumfalten geschieht entlang einer Schrägfaltlinie, die in einem vorbestimmten Winkel, vorzugsweise von 45°, gegenüber der Kabellängsrichtung verläuft.

Dadurch kommt man zu einem mehrlagigen rechteckigen Bandkabelelement, das je nach dem, ob es durch mindestens zwei- oder dreimaliges Umfalten zu einem mindestens dreilagigen bzw. vierlagigen Bandkabelelement gefaltet ist, Anschlüsse an drei oder vier Längsseiten des Bandkabelelementes aufweist. Damit ist eine Verteilung auf abgehende Verteilungsleitungen in zwei bzw. drei Richtungen möglich.

Wenn die von einem Bandkabelelement zur Verfügung gestellten Anschlüsse nicht ausreichen, kann man den Abzweigkoppler aus einem Stapel mehrerer Bandkabelelemente bilden. Die Anschlüsse benachbarter Bandkabelelemente können dadurch elektrisch gegeneinander isoliert werden, daß zwischen ihnen elektrisch isolierendes Material angeordnet wird oder die Anschlüsse benachbarter Bandkabelkoppler nur auf einer Breitseite des Bandkabelstücks durch Abisolieren freigelegt werden, derart, daß die freigelegten Anschlüsse benachbarter Bandkabelkoppler nicht zueinander weisen.

Besonders bevorzugt ist die Verwendung von Bandkabel mit Bandkabel-Flachleitern.

Bei Verwendung des erfindungsgemäßen Abzweigkopplers als Verteiler kann man die Leiter der eingehenden und der ausgehenden Leitungen mit den Anschlüssen des Bandkabelelementes verlöten. Bei Verwendung des Abzweigkopplers als Verbinder kann man zwischen den Anschlüssen des Bandkabelelementes und den damit zu verbindenden Leitungen eine lösbare Steckverbindung herstellen. Zu diesem Zweck können die Anschlüsse des Bandkabelelementes mittels bekannter Bandkabel-Steckverbinder mit den je zugehörigen Kabeln lösbar verbunden werden.

Ein erfindungsgemäßer Abzweigkoppler wird vorteilhafter Weise in einer ihn aufnehmenden, als Gehäuse dienenden Dose untergebracht, die mindestens ein Dosenunterteil und ein Dosenoberteil aufweist, zwischen welche der Abzweigkoppler einlegbar ist und welche lösbar miteinander verbunden sind, beispielweise durch Verrasten oder Verschrauben. Um das Eindringen von Feuchtigkeit zu unterbinden, sind Dosenoberteil und Dosenunterteil über mindestens eine Dichtung miteinander verbunden. Bei einer bevorzugten Ausführungsform ist die Dose mit einem flüssigkeitsdichten Entlüftungsventil versehen, das eine Membran aus gerecktem, microporösem PTFE (Polytetrafluorethylen) aufweist, mit welcher eine Entlüftungsöffnung in der Dose verschlossen ist.

Soll die Dose mehrere übereinandergestapelte Bandkabelelemente aufnehmen, kann man ihren Aufnahmeraum mit mehreren übereinander befindlichen Aufnahmefächern ausbilden, die je ein Bandkabelelement aufnehmen und voneinander durch isolierende Zwischendecken elektrisch getrennt sind. In den Zwischendecken kann eine Abschirmmetallisierung untergebracht sein, um benachbarte Bandkabelelemente gegeneinander elektromagnetisch abzuschirmen. Diese Abschirmmetallisierung kann in das Isoliermaterial von Zwischendecken eingebettet oder auf einer der beiden Oberflächen der jeweiligen Zwischendecke angeordnet sein. Im letzteren Fall ist darauf zu achten, daß die Isolierung der Anschlüsse der Bandkabelelemente auf denjenigen Breitseiten des Bandkabelstückes, die zu einer Abschirmmetallisierung weisen, nicht entfernt wird.

Die Erfindung sowie Vorteile und Weiterbildung der Erfindung werden nun anhand von Ausführungsformen näher erläutert. In den beiliegenden Zeichnungen zeigen:
- Fig. 1A bis 1C: eine erste Ausführungsform eines dreilagigen Bandkabelelementes mit in drei Richtungen weisenden Anschlüssen in verschiedenen Herstellungsphasen bzw. nach Anschluß von Kabelsignalleitern;
- Fig. 2A und 2B: eine Modifikation der in Fig. 1 gezeigten Ausführungsform eines Bandkabelelementes;
- Fig. 3A bis 3C: eine der Ausführungsform gemäß Fig. 1 entsprechende Ausführungsform, jedoch für den Anschluß von Leistungskabelleitern;
- Fig. 4A und 4B: eine Modifikation der in Fig. 3 gezeigten Ausführungsform;
- Fig. 5A bis 5C: eine Ausführungsform eines Bandkabelelementes 11 mit Anschlüssen in vier Richtungen in verschiedenen Herstellungsphasen bzw. nach dem Anschluß von Signalleitern von vier Kabeln;
- Fig. 6A und 6B: eine Modifikation der in Fig. 5 gezeigten Ausführungsform;
- Fig. 7A bis 7C: eine der Ausführungsform gemäß Fig. 5 entsprechende Ausführungsform für den Anschluß von Leistungskabelleitern;
- Fig. 8A und 8B: eine Modifikation der in Fig. 7 gezeigten Ausführungsform;
- Fig. 9: eine zweiteilige Dose für die Aufnahme eines Abzweigkopplers mit einem in Fig. 9A gezeigten Dosenunterteil und einem in Fig. 9B gezeigten Oberteil;
- Fig. 10: die in Fig. 9 gezeigte Dose mit einem in die Dose hineingeführten Kabel, wobei Fig. 10A und 10B wieder das Dosenoberteil bzw. das Dosenunterteil zeigen und in Fig. 10C ein mit einer Leitungsdurchführungsbuchse versehenes Kabel dargestellt ist; und
- Fig. 11: eine schematisierte Draufsicht auf eine Dose mit eingelegtem Abzweigkoppler und daran angeschlossenen Kabelleitern.

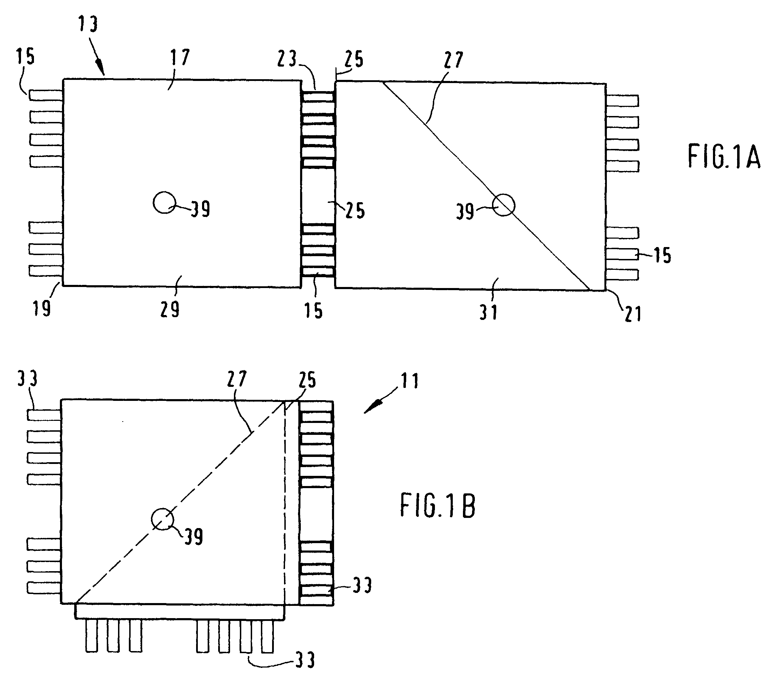

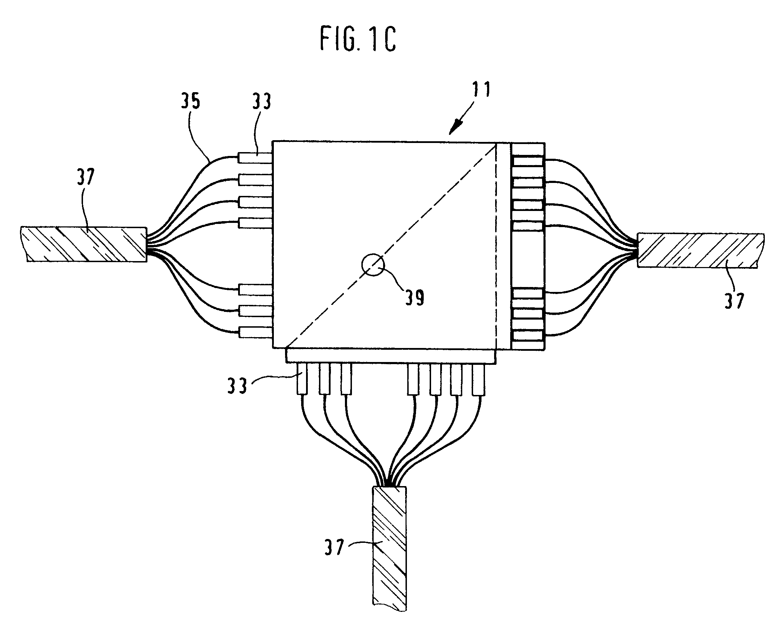

In den Figuren 1 bis 11 sind Ausführungsformen von Abzweigkopplern gezeigt, die je durch ein einziges Bandkabelelement gebildet sind. Ein Abzweigkoppler kann jedoch mehrere solche Bandkabelelemente aufweisen.

Allen in den Fig. 1 bis 8 gezeigten Bandkabelelementen ist gemeinsam, daß sie aus einem Bandkabelstück 13 hergestellt werden, das eine vorbestimmte Anzahl Bandkabelleiter 15 aufweist, die nebeneinanderliegend in ein Isoliermaterial 17 eingebettet sind und an den beiden Längsenden 19 und 21 des Bandkabelstücks 13 und in mindestens einem zwischen den beiden Längsenden 19 und 21 befindlichen Fenster 23 durch Abisolieren oder Weglassen des Isoliermaterials 17 auf mindestens einer Breitseite des Bandkabelstücks 13 zur Bildung von elektrischen Anschlüssen freigelegt sind. Gemeinsam ist allen diesen Ausführungsformen weiterhin, daß das freiliegende Bandkabelleiterbereiche aufweisende Bandkabelstück 13 mehreren Faltungen unterzogen wird, um ein mehrlagiges Bandkabelelement 11 zu schaffen, wodurch mehr Anschlüsse verfügbar gemacht werden als sie ein einlagiges Bandkabelelement aufweisen könnte. Dabei erfolgt an einer Querfaltungslinie eines jeden Fensters 23 eine Querfaltung des Bandkabelstücks 13 in einer quer zur Erstreckungsrichtung der Bandkabelleiter 15 und quer damit zur Kabellängsrichtung verlaufenden Querfaltrichtung und erfolgt eine Schrägfaltung um eine Schrägfaltungslinie 27, die in einem dem Fenster 23 benachbarten Bereich des Bandkabelstücks 13 in einem vorbestimmten Schrägwinkel gegenüber der Kabellängsrichtung verläuft.

Die einzelnen Ausführungsformen unterscheiden sich unter anderem dadurch, daß sie Bandkabelstücke 13 aufweisen, deren Bandkabelleiter 15 entweder für den Anschluß von Signalleitern oder für den Anschluß von Leistungsleitern dimensioniert sind.

Nicht dargestellt, jedoch auch möglich ist, für ein Bandkabelelement 11 ein Bandkabelstück zu verwenden, das einerseits für den Anschluß von Signalleitern und andererseits für den Anschluß von Leistungsleitern dimensionierte Bandkabelleiter aufweist.

Eine Gruppe von Ausführungsformen ist aus einem Bandkabelstück 13 mit nur einem Fenster 23 aufgebaut, wird durch eine einzige Querfaltung und eine einzige Schrägfaltung zu einem dreilagigen Bandkabelelement 11 und weist im fertig gefalteten Zustand Anschlüsse an drei verschiedenen Längsseiten auf. Eine andere Gruppe von Ausführungsformen ist aus einem Bandkabelstück 13 hergestellt, das mit zwei Fenstern 23 versehen ist, durch zwei Querfaltungen und eine Schrägfaltung in ein vierlagiges Bandkabelelement 11 gefaltet wird und im fertig gefalteten Zustand Anschlüsse an allen vier Längsseiten aufweist.

Ein weiterer Unterschied zwischen verschiedenen Ausführungsformen besteht darin, daß die Bandkabelleiter 15 an den Längsenden 19 und 21 des Bandkabelstücks 13 und/oder im Bereich des bzw. der Fenster 23 nur auf einer Breitseite oder auf beiden Breitseiten des Bandkabelstücks 13 durch Abisolieren freigelegt sind oder durch frei Lassen von Isoliermaterial freiliegen.

Die in den Fig. 1 bis 8 dargestellten Ausführungsformen von Bandkabelelementen werden nun anhand dieser Figuren im einzelnen betrachtet. Wenn dabei Angaben wie links, rechts, oben, unten usw. gemacht werden, beziehen diese sich auf die Darstellung in der jeweiligen Figur. Selbstverständlich können die damit bezeichneten Bereiche beim fertigen Produkt oder während dessen Herstellung in andere Richtungen weisen.

Fig. 1 zeigt eine Ausführungsform eines Bandkabelelementes mit Bandkabelleitern 15 in Form von Flachleitern, die alle für den Anschluß von Signalleitungen dimensioniert sind. Das in Fig. 1 gezeigte Bandkabelstück 13 besitzt einen linken Bandkabelbereich 29 und einen rechten Bandkabelbereich 31, die durch ein Fenster 23 voneinander getrennt sind. Die Bandkabelleiter 15 sind am linken Längsende 19 und am rechten Längsende 21 sowie im Fenster 25 auf beiden Breitseiten des Bandkabelstücks 13 durch Abisolieren freigelegt. Zur Herstellung des in Fig. 1B gezeigten Bandkabelelementes wird das in Fig. 1A gezeigte Bandkabelstück 13 zunächst um eine am rechten Querrand des Fensters 23 verlaufende Querfaltungslinie 25 umgefaltet und danach wird die Schrägfaltung um eine Schrägfaltungslinie 27 durchgeführt. Nach diesen beiden Faltungen hat man das in Fig. 1B gezeigte Bandkabelelement vorliegen. Dieses weist an drei Längsseiten freiliegende Bandkabelleiterenden auf, welche Anschlüsse 33 für Kabelleiter 35 von Verbindungskabeln 37 bilden, wie dies in Fig. 1C gezeigt ist.

Jeder der Bandkabelbereiche 29 und 31 ist mit je einem Durchgangsloch 39 versehen, die bei dem fertig gefalteten Bandkabelelement 31 übereinander liegen und den Durchlaß eines Befestigungselementes, z.B. einer Schraube, ermöglichen, welches durch eine das Bandkabelelement aufnehmende Dose hindurchgeführt wird, um die Dose mit dem Bandkabelelement an einer Wand oder dergleichen befestigen zu können.

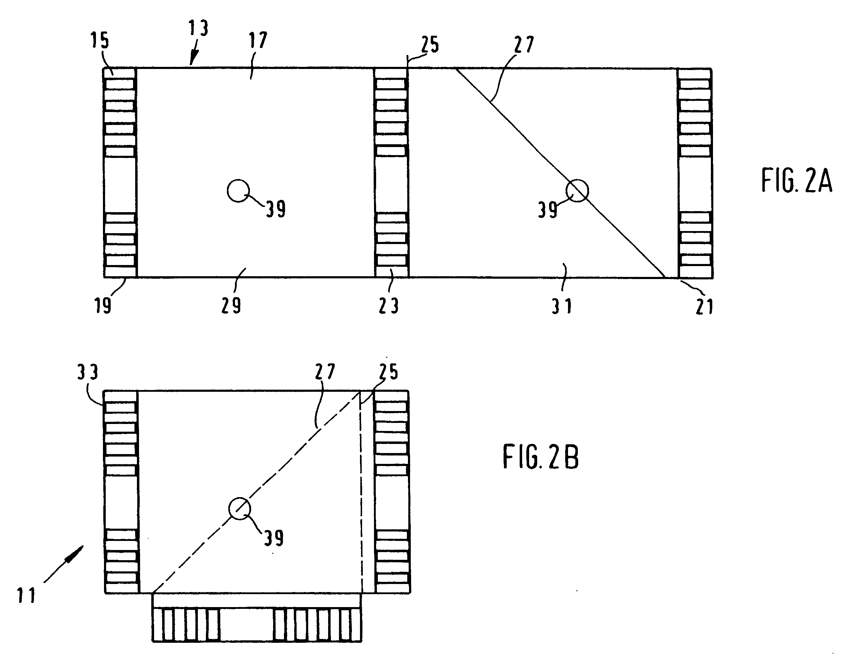

Die in Fig. 2 gezeigte Ausführungsform stimmt mit der in Fig. 1 gezeigten Ausführungsform mit der Ausnahme überein, daß die Anschlüsse 33 durch nur auf einer Breitseite des Bandkabelstücks 13 freigelegte Bandkabelleiter 15 gebildet sind. Dies im Unterschied zu der Ausführungsform in Fig. 1, bei welcher die beiden Oberflächen eines jeden Bandkabelleiters 15 freiglegt sind.

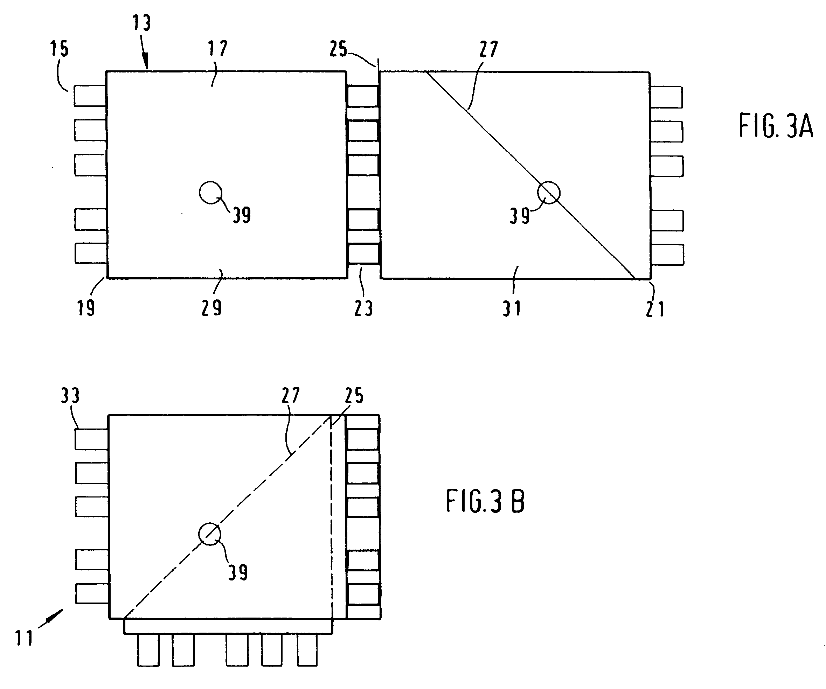

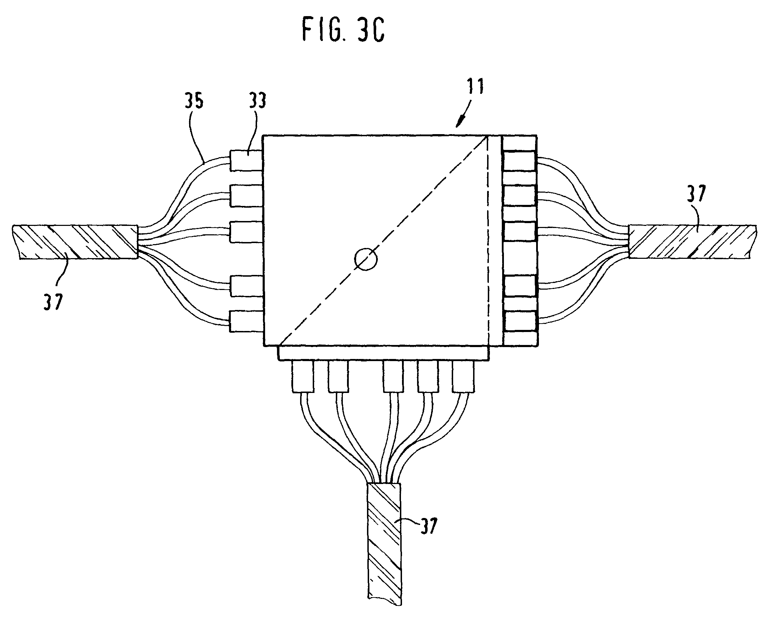

Die in Fig. 3 gezeigte Ausführungsform stimmt mit der in Fig. 1 gezeigten Ausführungsform mit der Ausnahme überein, daß das Bandkabelstück 13 Bandkabelleiter 15 aufweist, die für den Anschluß an Leistungsleiter dimensioniert sind, also Leiter, mit denen beispielsweise elektrische Versorgungsenergie geführt wird.

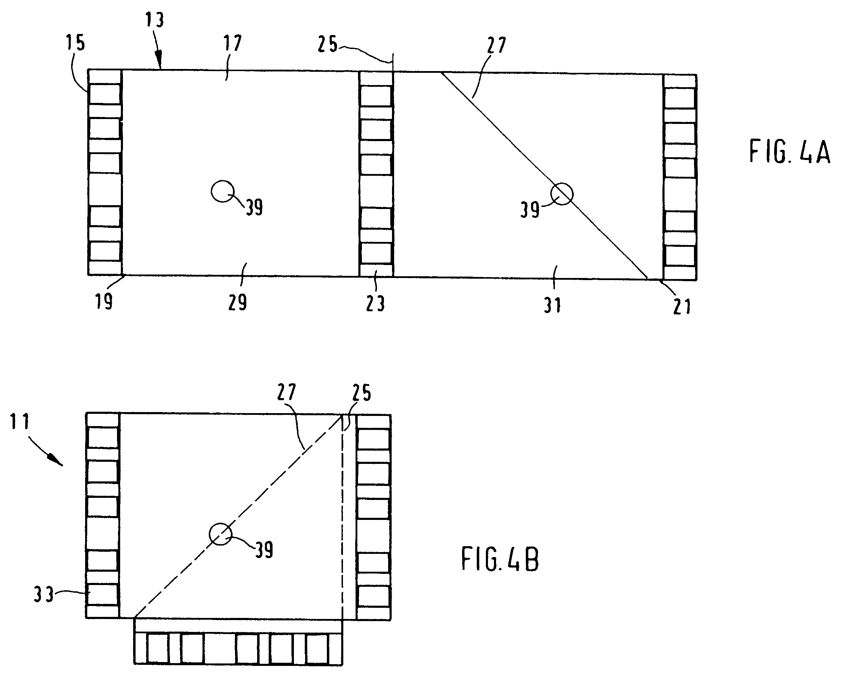

Die in Fig. 4 gezeigte Ausführungsform stimmt mit der in Fig. 2 gezeigten Ausführungsform überein, mit der Ausnahme, daß die Bandkabelleiter der in Fig. 4 gezeigten Ausführungsform für den Anschluß an Leistungsleiter dimensioniert sind.

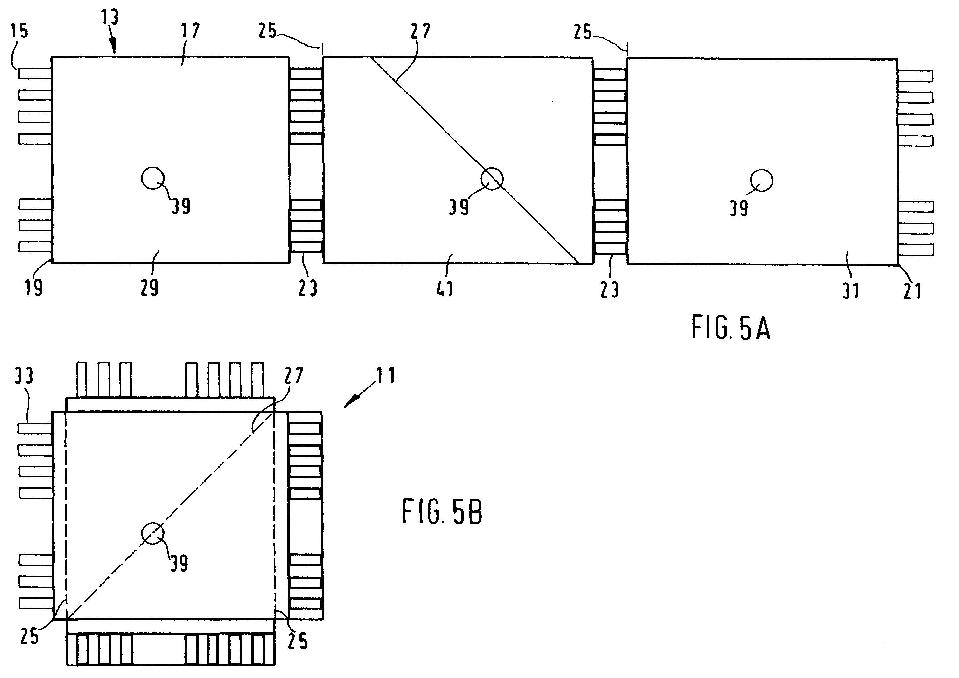

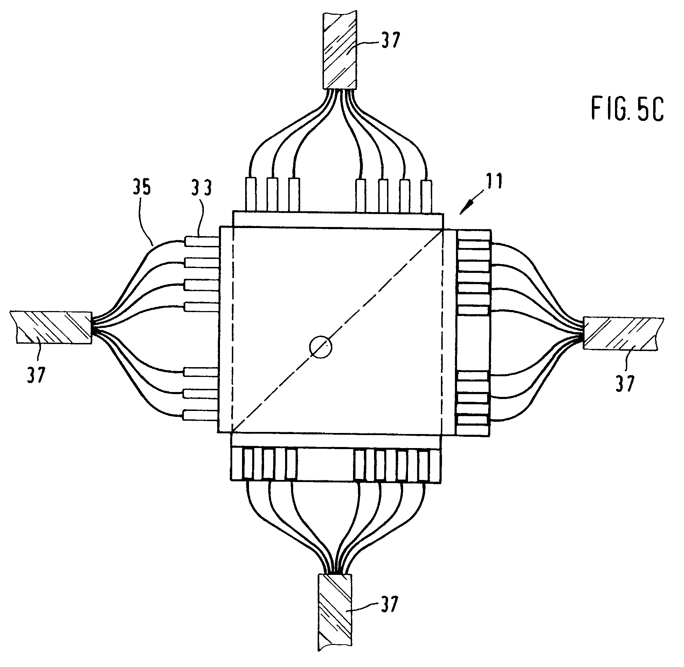

Fig. 5 zeigt eine Ausführungsform eines Bandkabelelementes 11, das im fertig gefalteten Zustand gemäß Fig. 5B an allen vier Längsseiten Anschlüsse 33 aufweist. Dieses Bandkabelelement ist durch dreimaliges Falten des in Fig. 5A dargestellten Bandkabelstücks 13 entstanden, das zwischen den beiden Längsenden 19 und 21 des Bandkabelstücks 13 zwei Fenster 23 aufweist und zwei Querfaltungslinien 25 besitzt, die je mit dem rechten Querrand des je zugehörigen Fenster 23 übereinstimmen. Die Reihenfolge der Faltungen ist mit den drei in Kreisen untergebrachten Ziffern 1 bis 3 angegeben. Das heißt, zunächst erfolgt eine Querfaltung um die linke Querfaltungslinie 25, danach wird eine Schrägfaltung um die Schrägfaltungslinie 27 durchgeführt und schließlich folgt eine zweite Querfaltung um die rechte Querfaltungslinie 25. Bei dieser Ausführungsform ist auch der mittlere Bandkabelbereich 41 mit einem Durchgangsloch 39 versehen, das im fertig gefalteten Zustand des Bandkabelelementes mit den Durchgangslöchern 39 im linken Bandkabelbereich 29 und im rechten Bandkabelbereich 31 fluchtet.

Fig. 5 zeigt ein durch dreimaliges Falten entstandenes vierlagiges Bandkabelelement, dessen Bandkabelleiter 15 alle für den Anschluß an Signalleitungen ausgelegt sind.

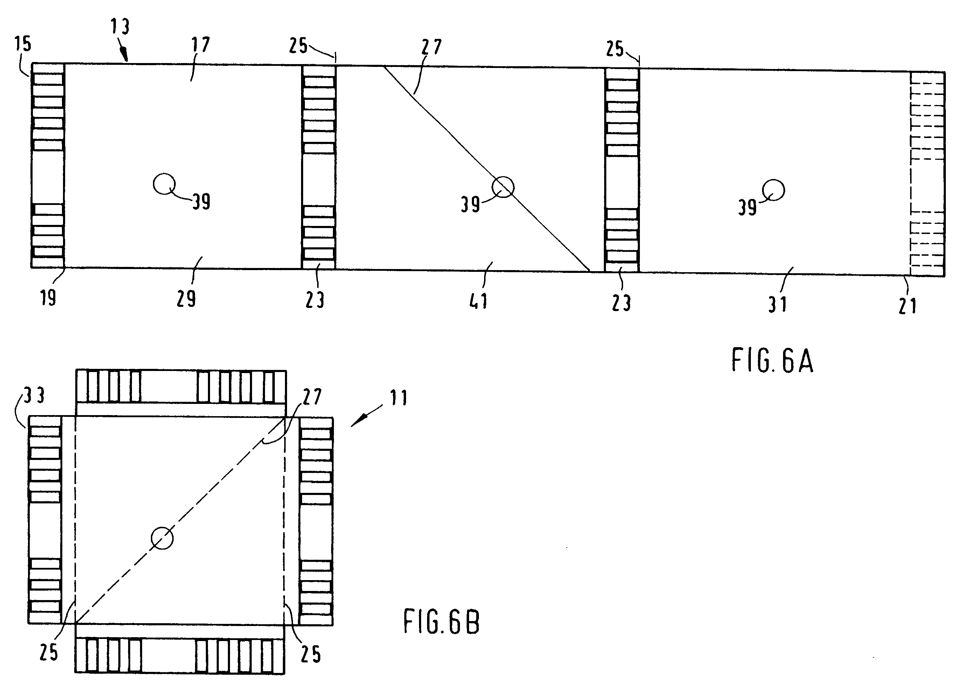

Fig. 6 zeigt eine Ausführungsform, die mit der in Fig. 5 gezeigten Ausfühlungsform mit der Ausnahme übereinstimmt, daß bei der Ausführungsform nach Fig. 6 die Anschlüsse 33 je nur auf einer Breitseite des Bandkabelstücks 13 freigelegt sind. Damit bei dem fertig gefalteten Bandkabelelement gemäß Fig. 6B die einseitig freiliegenden Anschlüsse 33 alle auf derselben Oberflächenseite zugänglich sind, werden bei dem in Fig. 6A gezeigten Bandkabelstück 13 die Anschlüsse 33 am rechten Längsende 23 nicht auf derselben Breitseite des Bandkabelstücks 13 freigelegt wie die restlichen Anschlüsse am linken Längsende 19 des Bandkabelstücks 13 und in den Fenstern 23. Dies ist in Fig. 6A dadurch angedeutet, daß die Anschlüsse 33 am rechten Längsende 21 des Bandkabelstücks 13 nur gestrichelt gezeigt sind.

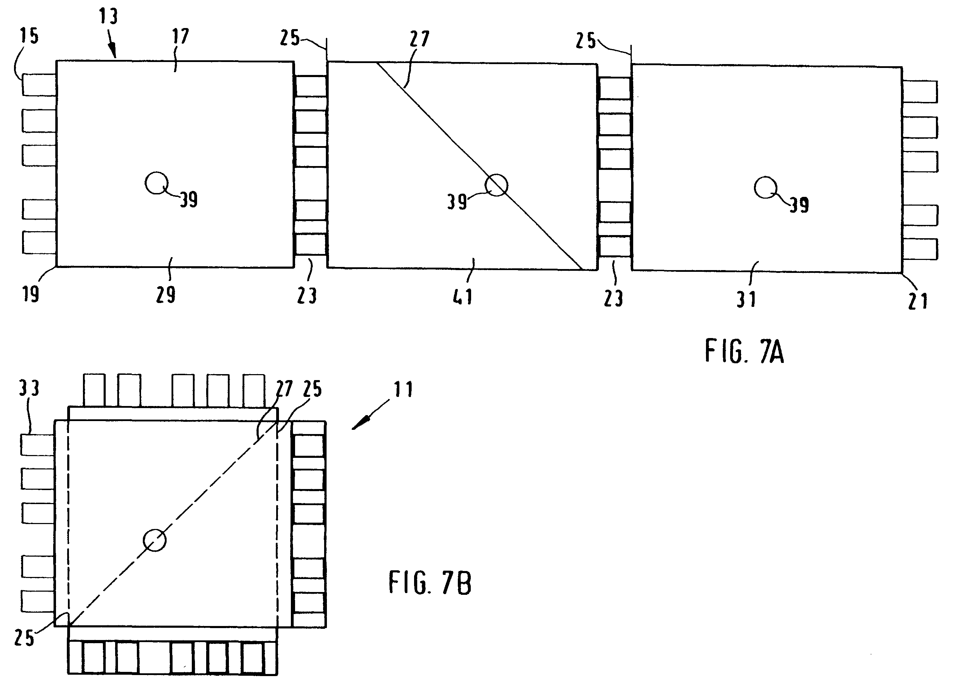

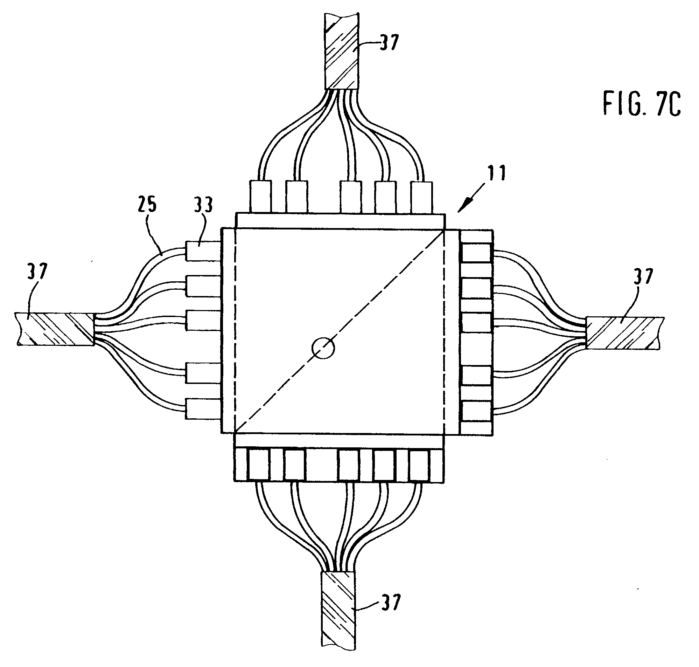

Fig. 7 zeigt eine Ausführungsform, die mit der in Fig. 5 gezeigten Ausführungsform mit der Ausnahme übereinstimmt, daß bei der Ausführungsform in Fig. 7 sämtliche Bandkabelleiter 15 für den Anschluß von Leistungsleitungen dimensioniert sind.

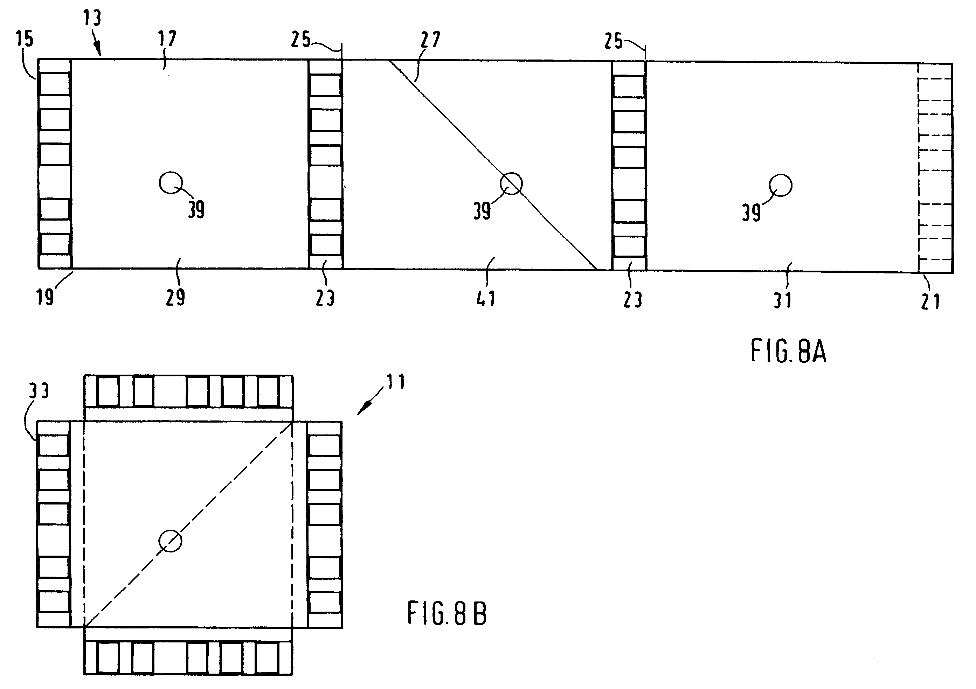

Die in Fig. 8 gezeigte Ausführungsform stimmt mit der in Fig. 7 gezeigten Ausführungsform mit der Ausnahme überein, daß bei der Ausführungsform gemäß Fig. 8 die Anschlüsse 33 je nur auf einer Breitseite des Bandkabelstücks 13 freigelegt sind.

Ein erfindungsgemäßer Abzweigkoppler mit einem Bandkabelelement der Art, wie sie anhand der Fig. 1 bis 8 erläutert worden ist, ist extrem leicht. Die Anschlüsse 33 liegen in rasterförmig geordneter Form vor und können somit leicht identifiziert und mit vorbestimmten Leitern von Verbindungskabeln verbunden oder von diesen getrennt werden. Von Vorteil ist außerdem, daß die Energie, die zum Herstellen einer Lötverbindung zwischen dünnen Bandkabelleitern 15 und Kabelleitern 35 benötigt wird, relativ gering ist.

Die Fenster kann man beispielsweise mittels Schneidens, Ätzens, Laserabtragung oder Schleifen herstellen. Das Anschließen von Kabelleitern 35 an die Anschlüsse 33 kann nicht nur durch Löten sondern auch durch Schweissen, Kleben, Klemmen oder Krimpen erfolgen.

Der Abzweigkoppler kann entweder in einer Gehäusenische eines Gerätes untergebracht werden, das sich am Verteilerort befindet, oder er kann in einer in aufnehmenden Dose untergebracht werden, die am Abzweigort befestigt werden kann.

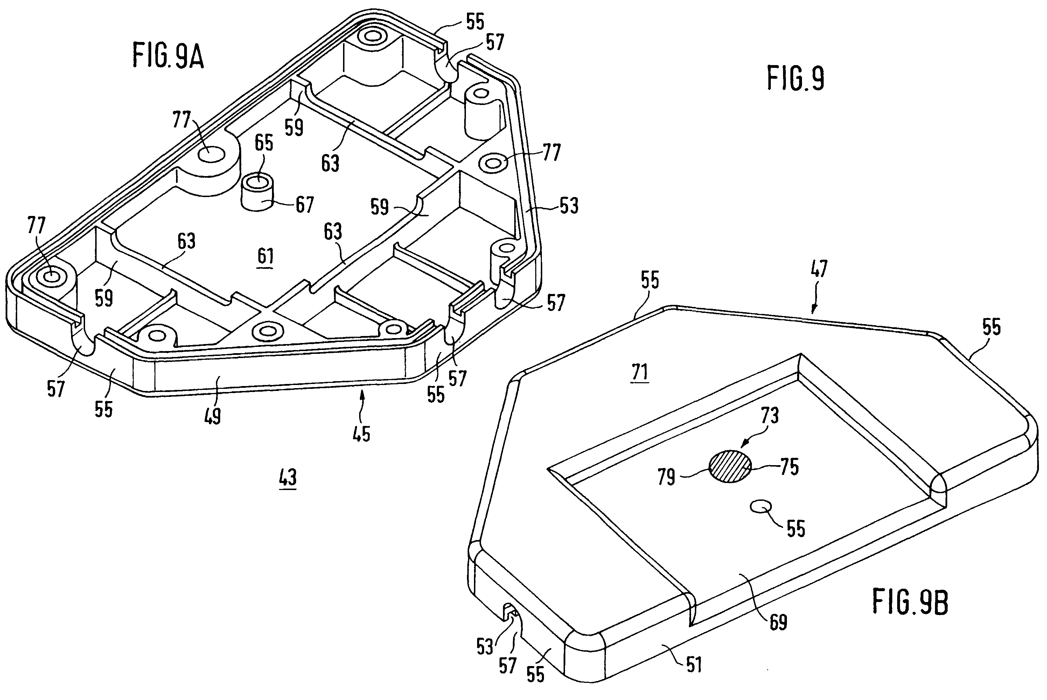

Eine Ausführungsform einer derartigen Dose 43 ist in Fig. 9 gezeigt und weist ein in Fig. 9A gezeigtes Dosenunterteil 45 und ein in Fig. 9B dargestelltes Dosenoberteil 47 auf. Eine derartige Dose ist für die Aufnahme eines Abzweigkopplers in Form eines Bandkabelelementes 11 ausgebildet, das beispielsweise gemäß Fig. 1C Anschlüsse 33 an drei Längsseiten aufweist und mit drei Verbindungskabeln 37 verbunden ist.

Das Dosenunterteil 45 und das Dosenoberteil 47 weisen je eine untere Dosenseitenwand 49 bzw. eine obere Dosenseitenwand 51 auf, die je mit einer umlaufenden Dichtungsaufnahmerinne 53 für die Aufnahme eines zwischen den beiden Dosenteilen 45 und 47 angeordneten Dichtungsrings versehen sind.

Die in Fig. 9 dargestellte Ausführungsform der Dose 43 weist grundsätzlich Dreieckform auf, wobei die drei Spitzen des Dreiecks je durch einen Abplattbereich ersetzt sind. Die Abplattbereiche 55 sind je mit mindestens einer Leitungsdurchführungsausnehmung 57 versehen, mittels welchen Verbindungskabel 37 durch die Dosenseitenwände 49 und 51 hindurchgeführt werden. Bei dem in Fig. 9A dargestellten Ausführungsbeispiel sind der längs unten und der rechts oben dargestellte Abplattbereich 55 je mit einer Leitungsdurchführungsausnehmung 57 versehen, während der in Fig. 9A rechts unten befindliche Abplattbereich 55 mit zwei Leitungsdurchführungsausnehmungen 57 versehen ist. Das Dosenoberteil 47 ist an entsprechenden Stellen mit Leitungsdurchführungsausnehmungen 57 versehen.

Im Inneren mindestens des Dosenunterteils 45 befinden sich Fachwände 59, innerhalb welcher ein Koppleraufnahmeraum 61 gebildet ist. Die Fachwandränder sind in ihrem mittleren Bereich je mit einer Fachwandausnehmung 63 versehen, deren Ausnehmungsgrund zur Abstützung der Anschlüsse 33 des Abzweigkopplers und/oder der Kabelleiter 35 dient.

Das Dosenunterteil 45 und das Dosenoberteil 47 sind je mit einer Befestigungsdurchgangsöffnung 65 versehen, die bei zusammengesetzter Dose 43 miteinander fluchten und das Hindurchführen eines Befestigungselementes erlauben, mittels welcher die Dose 43 an einem Gegenstand oder einer Wand befestigt werden kann. Um der Dose 43 Stabilität gegen Zusammendrücken zu verleihen, kann mindestens eine der Befestigungsdurchgangsöffnungen 65 in einer Zylinderwand gebildet sein, wobei eine gegenseitige Abstützung der beiden Dosenteile 45 und 47 mittels der Zylinderwand bzw. der Zylinderwände stattfindet.

Damit auch nach der Erstmontage zu dem im Koppleraufnahmeraum 61 untergebrachten Abzweigkoppler Zugang besteht, werden die beiden Dosenteile 45 und 47 in lösbarer Weise miteinander verbunden. Hierzu sind in Fig. 9A ersichtliche Rastlöcher 77 vorgesehen, in welche in der Zeichnung nicht dargestellte Rastvorsprünge an entsprechenden Stellen des Dosenoberteils 47 einrasten können.

Eine andere Möglichkeit besteht darin, die beiden Dosenteile 45 und 47 durch Schraubverbindungen lösbar aneinander zu befestigen.

Das Oberteil 47 ist mit einer Absenkung 69 in seiner Decke 71 versehen, deren Innenwand bei aneinander befestigten Dosenteilen 45 und 47 auf den freien Rändern der Fachwände 59 aufliegt. Dadurch erspart man sich entsprechende Fachwände auf der Innenseite des Dosenoberteils 47, was zu Materialeinsparung führt.

In der Decke 71 des Dosenoberteils 47, bei der in Fig. 9B dargestellten Ausführungsform innerhalb der Absenkung 69, ist ein Entlüftungsventil 73 angeordnet. Dieses weist eine kreisrunde Membran 75 auf, die in eine entsprechend geformte Membranaufnahmeöffnung 79 eingesetzt ist. Die Membran 75 besteht vorzugsweise aus direktem, microporösem PTFE, das Flüssigkeitsundurchlässig, jedoch flüssigkeitsdampfdurchlässig ist. Auf diese Weise kann innerhalb der geschlossenen Dose 43 befindliches Wasser verdampfen oder durch Erwärmung unter erhöhtem Druck stehende Luft entweichen, ohne daß Wasser von außen in die Dose 43 eindringen kann.

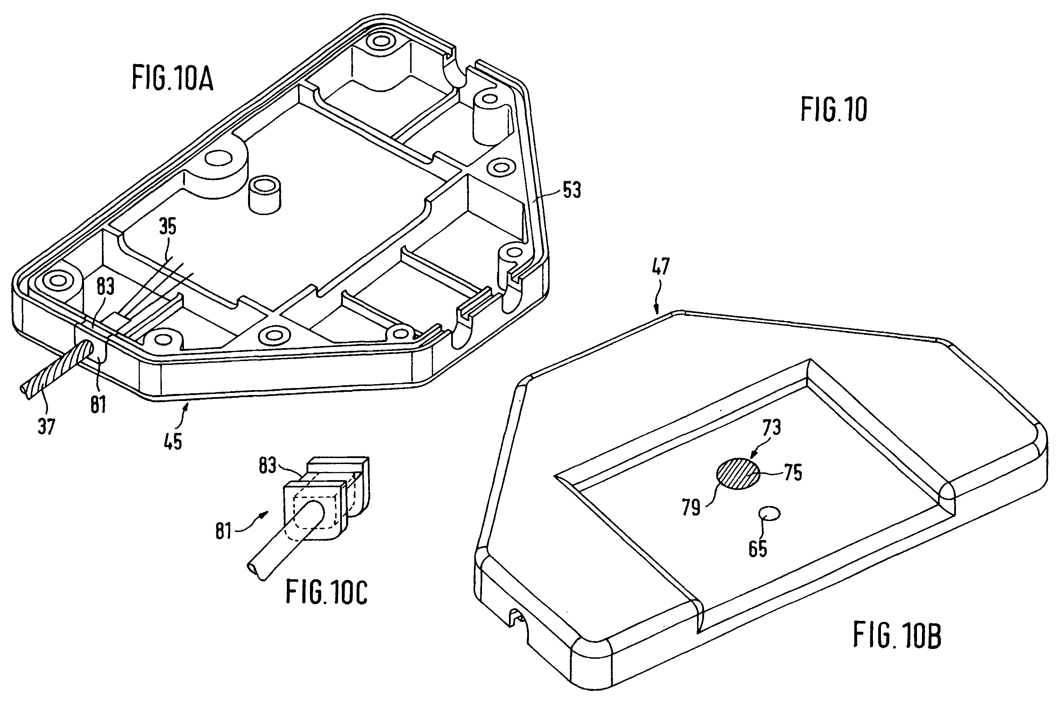

In Fig. 10 ist die in Fig. 9 gezeigte Dose nochmals dargestellt, jedoch zusätzlich ein durch eine Leitungsdurchführungsausnehmung 57 hindurchgeführtes Verteilerkabel 37 dargestellt. Wie man sieht, wird das Verteilerkabel bis in den Innenraum des Dosenunterteils 45 hineingeführt und sind die einzelnen Kabelleiter 35 erst im Inneren des Dosenunterteils 45 durch Abisolieren freigelegt. Zur Vermeidung von Kurzschlüssen kann man die Kabelleiter 35 mittels bekannter Technologien fixieren, z. B. mittels Fixierkämmen. Sie stützen sich auf dem Grund der benachbarten Fachwandausnehmung 63 ab. Um zu vermeiden, daß die geschlossene Dose 43 im Bereich der durch ihre Dosenseitenwände 49 und 51 hindurchgeführten Verteilerkabel 37 undicht wird, ist auf dem Außenumfang des Verbindungskabels 37 eine Dichtungsbuchse 81 angeordnet, die beispielsweise vor dem Freilegen der Kabelleiter 35 und vor dem Hindurchführen des Verbindungskabels 37 durch die betroffene Leitungsdurchführungsausnehmung 57 auf den Mantel des Verbindungskabels 37 aufgebracht worden ist, z. B. durch Aufspritzen, Aufschieben oder Aufkleben. Die Dichtungsbuchsen 81 können auch auf die entsprechenden Stellen der Verbindungskabel 37 aufgespritzt werden. Dies hat den Vorteil, daß die Dichtungsbuchsen 81 als Zugentlastung dienen können. Zu diesem Zweck können sie so gestaltet werden, daß sie die jeweilige Dosenseitenwand im Grund der zugehörigen Leitungsdurchführungsausnehmung 57 übergreifen und dadurch das Verbindungskabel 37 an einer Bewegung in seiner Längsrichtung hindern. Die Dichtungsbuchse 81 ist einerseits an die Form der Leitungsdurchführungsausnehmung 57 angepaßt und weist außerdem an mindestens einem Teil ihres Umfangs eine Dichtungseinlegerinne 83 auf, welche im wesentlichen die Querschnittsform der Dichtungsaufnahmerinne 53 hat und mit dieser fluchtet. Die Dichtungsaufnahmerinne 53 setzt sich somit in der Dichtungseinlegerinne 83 der Dichtungsbuchse 81 fort, so daß ein (nicht dargestellter) Dichtungsring ohne Unterbrechung und Störung um die Dose 43 umlaufen kann.

Ein Beispiel eines mit einer Dichtungsbuchse 81 versehenen Verbindungskabels ist in Fig. 10C dargestellt.

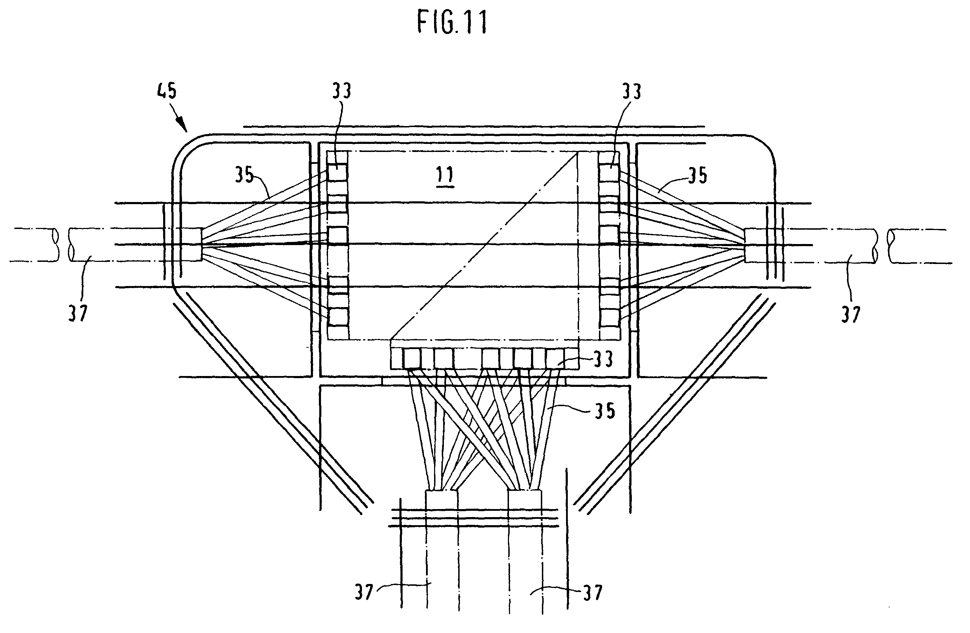

Fig. 11 zeigt in schematischer Darstellung eine Draufsicht auf ein Dosenunterteil 47, in welches als Abzweigkoppler ein Bandkabelelement 11 beispielsweise der in Fig. 1 dargestellten Art eingelegt ist, wobei dessen Anschlüsse 33 mit Kabelleitern 35 eines je zugehörigen Verbindungskabels 37 verbunden sind. Bei dem in Fig. 11 gezeigten Beispiel sind die beiden unten befindlichen Leitungsdurchführungsausnehmungen 57 je mit einem Verbindungskabel 37 besetzt und sind mit jedem der Anschlüsse 33 der unteren Anschlußreihe zwei Kabelleiter 37 verbunden, die von je einem der beiden dort befindlichen Verbindungskabel 37 stammen. Nimmt man beispielsweise an, daß das in Fig. 11 links befindliche Verbindungskabel 37 ein Zuleitungskabel ist, die restlichen drei Verbindungskabel 37 dagegen Abzweigleitungen sind, kann auf diese Weise mit der in Fig. 11 gezeigten Ausführungsform eines Abzweigkopplers eine Abzweigung auf drei abführende Kabel erreicht werden, mit den in Fig. 11 gezeigten Abzweigwinkeln.

Man kann für einen Abzweigkoppler mehrere übereinander gestapelte Bandkabelelemente 11 verwenden. Dabei kann z.B. ein Bandkabelelement 11 des Stapels für die Verteilung von Leistungsübertragungskabeln und ein anderes Bandkabelelement des Stapels für die Verteilung von Signalleitern verwendet werden. Ein solcher Stapel von Bandkabelelementen 11 kann in einer einzigen Dose 43 untergebracht werden. Die Anschlüsse 33 der gestapelten Bandkabelelemente 11 müssen elektrisch voneinander isoliert werden, beispielsweise durch Zwischenlegen von Folien aus elektrisch isolierendem Material wie PTFE.

Das Isoliermaterial 17 des Bandkabelelemente 11 besteht vorzugsweise aus Kunststoff, z.B. Polyester, Kapton (Marke der Firma Dupont für Poly-diphenyloxid-pyromellith-amid), ganz besonders bevorzugt aus PTFE. Die Temperaturbeständigkeit ist wichtig, um beim Löten sicherzustellen, daß das das Bandkabelelement 11 bildende Bandkabelstück 13 beim Löten nicht delaminiert.

Für die Bandkabelleiter 15 können sämtliche elektrisch leitenden Materialien in jeglicher Form verwendet werden. Bevorzugt werden Flachleiter aus Kupfer oder Kupferlegierungen, mit oder ohne Oberflächenversilberung.

Bei einem Ausführungsbeispiel wird ein Abzweigkoppler aus zwei übereinander gestapelten Bandkabelelementen 11 gebildet. Eines der beiden Bandkabelelemente 11 wird zur Leistungsverteilung und der andere der beiden Bandkabelelemente 11 wird zur Signalverteilung verwendet. Dabei besteht jedes Bandkabelelement 11 aus einem Bandkabelstück 13 mit einer Breite von 50 mm, einer Länge von 137 mm, mit einer Faltung gemäß Fig. 1. Bei dem Isoliermaterial 17 handelt es sich um PTFE mit einer Dicke von 0,25 mm. Die als Leistungsleiter dienenden Bandkabelleiter 15 werden je durch zwei übereinandergelegte, 0,2 mm dicke und 5 mm breite Kupferflachleiter (AWG 14) gebildet, wobei fünf als Leistungsleiter ausgebildete Bandkabelleiter 15 vorgesehen sind. Das zur Signalverteilung dienende Bandkabelelement 11 weist sieben versilberte Kupfer-Flachleiter (AWG 22) mit einer Dicke von 0,127 mm und einer Breite von 2,54 mm auf, wobei die auf dem Kupfer befindliche Silberschicht eine Schichtdicke von 1 µm besitzt.

Die Fenster sind herausgeschnitten worden. Die an den beiden Längsenden 19 und 21 des Bandkabelstücks 13 befindlichen Anschlüsse sind durch beidseitiges Abisolieren der Bandkabelleiterenden beidseitig freigelegt worden. Im Fenster 23 des Bandkabelstücks 13 sind die Bandkabelleiter 15 nur einseitig freigelegt worden.

Bei diesem Ausführungsbeispiel wurde als zu verteilendes Kabel ein Kabel mit folgendem Aufbau verwendet:
drei versilberte Kupfer-Rundleiter (AWG 14) mit einem Durchmesser von 1,8 mm;
zwei versilberte Kupfer-Rundleiter (AWG 18) mit einem Durchmesser von 1,27 mm;
sieben versilberte Kupfer-Rundleiter (AWG 22) mit einem Durchmesser von 0,8 mm;
Polyester-Isolierung der Rundleiter; und
Kabelmantel aus Polyurethan.

Das Kabel wurde abgeschnitten. Am Schnittende wurden die Kabelleiter abisoliert und mit einer Zinn-Blei-Legierung (Lot 60/40) auf die Bandkabelleiter 15 des jeweiligen Abzweigkopplers bei einer Löttemperatur von 290° C aufgelötet.

In den Fig. 1 bis 8 sind Ausführungsformen von Bandkabelelementen 11 gezeigt, deren Bandkabelstücke je sieben Signalleiter oder je fünf Leistungsleiter pro Bandkabelstück aufweisen.

Was die Dose 43 betrifft, kann die Dichtung in die Dichtungsaufnahmerinne des Dosenunterteils gelegt werden. Stattdessen oder zusätzlich kann eine Dichtung um den Außenumfang der Absenkung des Dosenoberteils gelegt werden.

Bei in die Dose eingelegtem Bandkabelelement 11 fluchtet dessen Durchgangsloch 39 mit der Schraubendurchgangsöffnung 65 der Dose 43. Das Durchgangsloch 39 des Bandkabelelementes 11 kann auch derart dimensioniert sein, daß es an den Außenumfang der Zylinderwand 67 angepaßt ist, das Bandkabelelement somit über die Zylinderwand 67 geschoben werden kann. Auf diese Weise kann eine lagerichtige Fixierung und Zentrierung des Bandkabelelementes 11 relativ zur Dose erreicht werden.

### Bezugszeichenliste

- 11: Bandkabelelement
- 13: Bandkabelstück
- 15: Bandkabelleiter
- 17: Isoliermaterial
- 19: (linkes) Längsende des Bandkabelstücks
- 21: (rechtes) Längsende des Bandkabelstücks
- 23: Fenster
- 25: Querfaltungslinie
- 27: Schrägfaltungslinie
- 29: linker Bandkabelbereich
- 31: rechter Bandkabelbereich
- 33: Anschlüsse
- 35: Leistungs- und/oder Signalleitungen
- 37: Verbindungskabel
- 39: Durchgangsloch
- 41: mittlerer Bandkabelbereich
- 43: Dose
- 45: Dosenunterteil
- 47: Dosenoberteil
- 49: untere Dosenseitenwand
- 51: obere Dosenseitenwand
- 53: Dichtungsaufnahmerinne
- 55: Abplattbereich
- 57: Leitungsdurchführungsausnehmung
- 59: Fachwände
- 61: Koppleraufnahmeraum
- 63: Fachwandausnehmung
- 65: Befestigungsdurchgangsöffnung
- 67: Zylinderwand
- 69: Absenkung
- 71: Decke
- 73: Entlüftungsventil
- 75: Membran
- 77: Rastlöcher
- 79: Membranaufnahmeöffnung
- 81: Dichtungsbuchse
- 83: Dichtungseinlegerinne

## Patentansprüche

1. Abzweigkoppler für elektrische Leitungen (35),
mit einem Bandkabelstück (13) mit zwei Längsenden (19, 21), wobei:
das Bandkabelstück (13) mehrere nebeneinander angeordnete, sich in Kabellängsrichtung erstreckende Bandkabelleiter (15) mit je einer oberen und einer unteren Leiterseite aufweist;
die Bandkabelleiter (15) in Isoliermaterial (17) eingebettet sind;
die Bandkabelleiter (15) an den beiden Längsenden (19, 21) und in mindestens einem dazwischen befindlichen Fenster (23) freiliegende Leiterbereiche aufweisen, in denen sie auf mindestens einer der beiden Leiterseiten frei von Isoliermaterial (17) sind; und
das Bandkabelstück (13) durch mehrfaches Übereinanderfalten zu einem teilweise mindestens dreilagigen Bandkabelelement gefaltet ist, derart, daß die freiliegenden Leiterbereiche an drei verschiedenen Seiten des Bandkabelelementes (11) liegen und Anschlüsse (33) für die elektrischen Leitungen (35) bilden.

2. Abzweigkoppler nach Anspruch 1, bei welchem das Übereinanderfalten eine Querumfaltung des Bandkabelstücks (13) in einer quer zur Kabellängsrichtung verlaufenden Querfaltungslinie (25) mindestens in dem Fenster (23) und eine Schrägumfaltung des Bandkabelstücks (13) in einer unter einem vorbestimmten Schrägwinkel gegenüber der Kabellängsrichtung verlaufenden Schrägfaltungslinie (27) mindestens zwischen dem Fenster (23) und einem der beiden Kabellängsenden umfaßt.

3. Abzweigkoppler nach Anspruch 2, mit einem vierlagigen Bandkabelelement (11), das durch ein Bandkabelstück (13) gebildet ist, bei dem zwischen den beiden Kabellängsenden (19, 21) zwei in Kabellängsrichtung voneinander beabstandete Fenster (23) gebildet sind und bei dem in einem zwischen den beiden Fenstern (23) befindlichen Mittelbereich (41) des Bandkabelstücks (13) eine weitere Schrägumfaltung (bei 27) und mindestens im Bereich eines jeden der beiden Fenster (23) eine Querumfaltung (bei 25) vorhanden sind, wodurch das Bandkabelelement (11) an allen vier Seiten Anschlüsse (33) in Form von freiliegenden Leiterbereichen aufweist.

4. Abzweigkoppler nach einem der Ansprüche 1 bis 3, bei welchem sich jede im Bereich eines Fensters (23) vorgesehene Querumfaltung an einem Querrand des jeweiligen Fensters (23) befindet.

5. Abzweigkoppler nach einem der Ansprüche 1 bis 4, bei welchem mehrere mehrlagige Bandkabelelemente (11) übereinandergestapelt sind.

6. Abzweigkoppler nach Anspruch 5, bei welchem die Anschlüsse (33) je benachbarter Bandkabelelemente (11) durch elektrisch isolierendes Material elektrisch voneinander getrennt sind.

7. Abzweigkoppler nach Anspruch 6, bei welchem die Anschlüsse (33) benachbarter Bandkabelelemente (11) durch eine Zwischenlage in Form einer Kunststofffolie voneinander isoliert sind.

8. Abzweigkoppler nach Anspruch 7, bei welchem die Anschlüsse (33) benachbarter Bandkabelelemente (11) dadurch auf nur einer Seite des Bandkabelstückes (13) voneinander isoliert sind, daß die Bandkabelleiter (15) auf nur einer ihrer beiden Leiterseiten frei von Isoliermaterial sind.

9. Abzweigkoppler nach einem der Ansprüche 1 bis 8, dessen Isoliermaterial (17) durch einen aus der Gruppe Polytetrafluorethylen (PTFE), Polyester und Polyiamide, insbesondere Poly-diphenyloxid-pyromellith-amid, ausgewählten Kunststoff gebildet ist.

10. Abzweigkoppler nach einem der Ansprüche 1 bis 9, dessen Bandkabelleiter (15) durch Flachleiter gebildet sind.

11. Verfahren zur Herstellung eines Abzweigkoppler für elektrische Leitungen, bei welchem
ein Bandkabelstück (13) bereitgestellt wird, das eine vorbestimmte Kabellänge, mehrere nebeneinander angeordnete, sich in Kabellängsrichtung erstreckende Bandkabelleiter (15) mit je einer oberen und einer unteren Leiterseite und die Bandkabelleiter einbettendes Isoliermaterial (17) aufweist;
Bereiche der Bandkabelleiter (15) an beiden Längsenden (19, 21) des Bandkabelstücks (11) und mindestens in einem Fenster (23) zwischen den beiden Längsenden (19, 21) auf mindestens einer der beiden Leiterseiten durch Abisolieren des Isoliermaterials (17) freigelegt werden,
das Bandkabelstück (13) durch mehrfaches Übereinanderfalten zu einem teilweise mindestens dreilagigen Bandkabelelement (11) gefaltet wird, derart, daß die freigelegten Bereiche der Bandkabelleiter (15) an mindestens drei verschiedenen Seiten des Bandkabelelementes (11) zu liegen kommen und Anschlüsse (33) für die Leitungen (35) bilden können.

12. Verfahren nach Anspruch 11, bei welchem beim mehrfachen Übereinanderfalten des Bandkabelstücks (13) eine Querumfaltung des Bandkabelstücks (13) in einer quer zur Kabellängsrichtung verlaufenden Querfaltungslinie (25) mindestens in dem Fenster (23) und eine Schrägumfaltung des Bandkabelstücks (13) in einer unter einem vorbestimmten Schrägwinkel gegenüber der Kabellängsrichtung verlaufenden Schrägfaltungslinie (27) mindestens zwischen dem Fenster (23) und einem der beiden Kabellängsenden (19, 21) durchgeführt werden.

13. Verfahren nach Anspruch 11 oder 12, bei welchem zwischen den beiden Längsenden (19, 21) zwei Fenster (23) gebildet werden, wobei in einem zwischen den beiden Fenstern (23) befindlichen Mittelbereich des Bandkabelstücks (13) eine Schrägumfaltung und mindestens im Bereich eines jeden der beiden Fenster (23) eine Querumfaltung durchgeführt wird, derart, daß ein vierlagiges Bandkabelelement (11) gebildet wird, das an allen vier Seiten Anschlüsse (33) in Form von freigelegten Bandkabelleiterbereichen aufweist.

14. Verfahren nach Anspruch 12 oder 13, bei welchem jede im Bereich eines Fensters (23) vorgesehene Querumfaltung an einem Querrand des jeweiligen Fensters (23) gebildet wird.

## Claims

1. A branch coupler for electric lines (35),
comprising a piece of ribbon cable (13) having two longitudinal ends (19, 21),
wherein:
said piece of ribbon cable (13) comprises a plurality of ribbon cable conductors (15) arranged side by side and extending in the longitudinal direction of the cable and each having an upper and a lower conductor side;
said ribbon cable conductors (15) are embedded in insulating material (17);
said ribbon cable conductos (15), at both longitudinal ends (19, 21) thereof as well as in at least one window (23) located therebetween, have ex<posed conductor portions in which they are free from insulating material (17) on at least one of said two conductor sides; and
said piece of ribbon cable (13), by multiple folding thereof over itself, is folded so as to form an in part at least three-layered ribbon cable element such that the exposed conductor portions are located on three different sides of the ribbon cable element (11) and constitute terminal means (33) for the electric lines (35).

2. A branch coupler according to claim 1,
wherein said folding comprises transverse folding of said piece of ribbon cable (13) along a transverse folding line (25) extending transversely to the longitudinal direction of the cable, at least in said window (23), as well as oblique folding of said piece of ribbon cable (13) along an oblique folding line (27) extending at a specific oblique angle with respect to the longitudinal direction of the cable, at least between the window (23) and one of the two longitudinal cable ends.

3. A branch coupler according to claim 2,
comprising a four-layered ribbon cable element (11) constituted by a piece of ribbon cable (13) in which two windows (23) spaced apart in longitudinal direction of the cable are formed between the two longitudinal cable ends (19, 21) and in which an additional oblique folding (at 27) is provided in a central portion (41) of said piece of ribbon cable (13) located between said two windows (23), and a transverse folding (at 25) is provided at least in the region of each of said two windows (23), such that the ribbon cable element (11) has terminal means (33) in the form of exposed conductor portions on all four sides thereof.

4. A branch coupler according to any of claims 1 to 3,
wherein each transverse folding provided in the region of a window (23) is located at a transverse edge of the respective window (23).

5. A branch coupler according to any of claims 1 to 4,
wherein a plurality of multi-layered ribbon cable elements (11) are stacked over each other.

6. A branch coupler according to claim 5,
wherein the terminal means (33) of respective adjacent ribbon cable elements (11) are electrically isolated from each other by electrically insulating material.

7. A branch coupler according to claim 6,
wherein the terminal means (33) of adjacent ribbon cable elements (11) are isolated from each other by an intermediate layer in the form of a plastics film.

8. A branch coupler according to claim 7,
wherein the terminal means (33) of adjacent ribbon cable elements (11) are isolated from each other on only one side of said piece of ribbon cable (13) in that the ribbon cable conductors (15) are free from insulating material on only one of their two conductor sides.

9. A branch coupler according to any of claims 1 to 8,
wherein the insulating material (17) thereof is constituted by a plastics material selected from the group of polytetrafluoroethylene (PTFE), polyester and polyamide, in particular poly-diphenyloxide-pyromellite-amide.

10. A branch coupler according to any of claims 1 to 9,
wherein the ribbon cable conductors (15) thereof are constituted by flat conductors.

11. A method of making a branch coupler for electric lines,
comprising the following steps:
providing a piece of ribbon cable (13) having a predetermined cable length, a plurality of ribbon cable conductors (15) arranged side by side and extending in the longitudinal direction of the cable and each having an upper and a lower conductor side, as well as insulating material (17) embedding said ribbon cable conductors;
exposing portions of said ribbon cable conductors (15) at both longitudinal ends (19, 21) of said piece of ribbon cable (11) and in at least one window (23) between said two longitudinal ends (19, 21) on at least one of said two conductor sides by stripping said insulating material (17) therefrom;
folding said piece of ribbon cable (13) by multiple folding thereof over itself so as to form an in part at least three-layered ribbon cable element (11), such that the exposed portions of the ribbon cable conductors (15) come to lie on at least three different sides of the ribbon cable element (11) and are adapted to constitute terminal means (33) for said lines (35).

12. A method according to claim 11,
wherein said multiple folding of said piece of ribbon cable (13) comprises transverse folding of said piece of ribbon cable (13) along a transverse folding line (25) extending transversely to the longitudinal direction of the cable, at least in said window (23), as well as oblique folding of said piece of ribbon cable (13) along an oblique folding line (27) extending at a specific oblique angle with respect to the longitudinal direction of the cable, at least between the window (23) and one of the two longitudinal cable ends (19, 21).

13. A method according to claim 11 or 12,
wherein two windows (23) are formed between the two longitudinal ends (19, 21), and wherein an oblique folding is made in a central portion of said piece of ribbon cable (13) located between said two windows (23), and a transverse folding is made at least in the region of each of said two windows (23), such that a four-layered ribbon cable element (11) is formed having terminal means (33) in the form of exposed ribbon cable conductor portions on all four sides thereof.

14. A method according to claims 12 or 13,
wherein each transverse fold provided in the region of a window (23) is formed on a transverse edge of the respective window (23).

## Revendications

1. Coupleur de dérivation pour lignes électriques (35), équipé d'un tronçon de câble plat (13) avec deux extrémités longitudinales (19, 21), dans lequel :
le tronçon de câble plat (13) présente plusieurs conducteurs de câble plat (15) juxtaposés, s'étendant dans le sens longitudinal du câble avec chacun un côté conducteur supérieur et un côté conducteur inférieur ;
les conducteurs de câble plat (15) sont noyés dans un matériau isolant (17) ;
les conducteurs de câble plat (15) présentent aux deux extrémités longitudinales (19, 21) et dans au moins une fenêtre (23) intermédiaire des régions conductrices à nu, dans lesquelles ils sont dégagés de matériau isolant (17) sur au moins un des deux côtés conducteurs ; et
le tronçon de câble plat (13) est replié par plusieurs pliages superposés en un élément de câble plat au moins partiellement à trois couches, de telle sorte que les régions conductrices à nu se trouvent sur trois côtés différents de l'élément de câble plat (11) et forment des raccords (33) pour les lignes électriques (35).

2. Coupleur de dérivation selon la revendication 1, dans lequel le pliage superposé comprend un pliage transversal du tronçon de câble plat (13) selon une droite de pliage (25) s'étendant transversalement à la direction longitudinale du câble au moins dans la fenêtre (23) et un pliage oblique du tronçon de câble plat (13) selon une droite de pliage oblique (27) s'étendant selon un angle oblique prédéterminé vis-à-vis du sens longitudinal du câble au moins entre la fenêtre (23) et l'une des deux extrémités longitudinales du câble.

3. Coupleur de dérivation selon la revendication 2, avec un élément de câble plat à quatre couches (11) qui est formé par un tronçon de câble plat (13), dans lequel entre les deux extrémités longitudinales du câble (19, 21) sont formées deux fenêtres (23) écartées l'une de l'autre dans le sens longitudinal du câble et dans lequel dans une région médiane (41) du tronçon de câble plat (13) se trouvant entre les deux fenêtres (23) sont prévus un autre pliage oblique (en 27) et au moins à proximité de chacune des deux fenêtres -(23) un pliage transversal (en 25), de telle sorte que l'élément de câble plat (11) présente sur les quatre côtés des raccordements (33) sous la forme de régions conductrices à nu.

4. Coupleur de dérivation selon une des revendications 1 à 3, dans lequel chaque pliage transversal prévu à proximité d'une fenêtre (23) se trouve sur un bord transversal de la fenêtre respective (23).

5. Coupleur de dérivation selon une des revendications 1 à 4, dans lequel plusieurs éléments de câble plat à plusieurs couches (11) sont superposés.

6. Coupleur de dérivation selon la revendication 5, dans lequel les raccordements (33) d'éléments de câble plat adjacents (11) sont séparés électriquement les uns des autres par un matériau électriquement isolant.

7. Coupleur de dérivation selon la revendication 6, dans lequel les raccordements (33) d'éléments de câble plat adjacents (11) sont isolés les uns des autres par une couche intermédiaire sous la forme d'une feuille de matière plastique.

8. Coupleur de dérivation selon la revendication 7, dans lequel les raccordements (33) d'éléments de câble plat adjacents (11) sont isolés les uns des autres sur seulement un côté du tronçon de câble plat (13) par le fait que les conducteurs de câble plat (15) sont dégagés de matériau isolant sur seulement un de leurs deux côtés conducteurs.

9. Coupleur de dérivation selon une des revendications 1 à 8, dont le matériau isolant (17) est formé par une matière plastique choisie parmi l'un du groupe polytétrafluoréthylène (PTFE), polyester et polyamide, en particulier poly-diphényloxyde-pyroméllite-amide.

10. Coupleur de dérivation selon une des revendications 1 à 9, dont les conducteurs de câble plat (15) sont formés par des conducteurs plats.

11. Procédé de fabrication d'un coupleur de dérivation pour lignes électriques, dans lequel un tronçon de câble plat (13) est préparé, qui présente une longueur de câble prédéterminée, plusieurs conducteurs de câble plat (15) juxtaposés, s'étendant dans le sens longitudinal du câble avec chacun un côté conducteur supérieur et un côté conducteur inférieur et un matériau isolant (17) noyant les conducteurs du câble plat ;
des régions des conducteurs de câble plat (15) aux deux extrémités longitudinales (19, 21) du tronçon de câble plat (11) et au moins dans une fenêtre (23) entre les deux extrémités longitudinales (19, 21) sont à nu par enlèvement du matériau isolant (17) sur au moins un des deux côtés conducteurs,
le tronçon de câble plat (13) est replié par plusieurs pliages superposés en un élément de câble plat (11) partiellement au moins en trois couches, de telle sorte que les régions à nu des conducteurs du câble plat (15) se trouvent sur au moins trois côtés différents de l'élément de câble plat (11) et peuvent former des raccordements (33) pour les lignes (35).

12. Procédé selon la revendication 11, dans lequel lors du pliage multiple du tronçon de câble plat (13), un pliage transversal du tronçon de câble plat (13) est effectué selon une ligne de pliage (25) s'étendant transversalement à la direction longitudinale du câble au moins dans la fenêtre (23) et un pliage oblique du tronçon de câble plat (13) est effectué selon une ligne de pliage (27) s'étendant selon un angle oblique prédéterminé vis-à-vis de la direction longitudinale du câble au moins entre la fenêtre (23) et une des deux extrémités longitudinales du câble (19, 21).

13. Procédé selon la revendication 11 ou 12, dans lequel entre les deux extrémités longitudinales (19, 21) sont formées deux fenêtres (23), dans lequel dans une région médiane du tronçon de câble plat (13) se trouvant entre les deux fenêtres (23) est formé un pliage oblique et au moins à proximité de chacune des deux fenêtres (23) un pliage transversal, de telle sorte qu'un élément de câble plat à quatre couches est formé, qui présente sur les quatre côtés des raccordements (33) sous la forme de régions conductrices de câble plat à nu.

14. Procédé selon la revendication 12 ou 13, dans lequel chaque pliage transversal prévu à proximité d'une fenêtre (23) est formé sur un bord transversal de la fenêtre respective (23).
